Europäisches Patentamt

European Patent Office

Office européen des brevets

(19)

(11) Veröffentlichungsnummer: **0 295 275
B1**

(12) **EUROPÄISCHE PATENTSCHRIFT**

(45) Veröffentlichungstag der Patentschrift: **02.05.90**

(51) Int. Cl.⁵: **B 60 K 23/02**

(21) Anmeldenummer: **88900036.0**

(22) Anmeldetag: **09.12.87**

(86) Internationale Anmeldenummer:
**PCT/HU87/00054**

(87) Internationale Veröffentlichungsnummer:
**WO 88/04242 16.06.88 Gazette 88/13**

(54) ADAPTER ZUR BETÄTIGUNG DER WELLENKUPPLUNG VON KRAFTFAHRZEUGEN.

(30) Priorität: **11.12.86 HU 515486**

(43) Veröffentlichungstag der Anmeldung:
**21.12.88 Patentblatt 88/51**

(45) Bekanntmachung des Hinweises auf die
Patenterteilung:
**02.05.90 Patentblatt 90/18**

(84) Benannte Vertragsstaaten:
**AT BE CH DE FR GB IT LI LU NL SE**

(56) Entgegenhaltungen:
**EP-A-0 193 502
DE-A-1 505 452
DE-A-3 004 930
DE-A-3 216 244**

(73) Patentinhaber: **Puglits, János, Dr. Dipl.-Ing.
Zolyomi ut 13
H-1118 Budapest (HU)**
(73) Patentinhaber: **Ratsko, Istvan, Dr. Dipl.-Ing.
Zolyomi ut 13
H-1118 Budapest (HU)**
(73) Patentinhaber: **Váradi, János, Dipl.-Ing.
Tallér utca 8
H-1145 Budapest (HU)**

(72) Erfinder: **Puglits, János, Dr. Dipl.-Ing.
Zolyomi ut 13
H-1118 Budapest (HU)**
Erfinder: **Ratsko, Istvan, Dr. Dipl.-Ing.
Zolyomi ut 13
H-1118 Budapest (HU)**
Erfinder: **Váradi, János, Dipl.-Ing.
Tallér utca 8
H-1145 Budapest (HU)**

(74) Vertreter: **Patentanwälte Viering & Jentschura
Steinsdorfstrasse 6
D-8000 München 22 (DE)**

**Beschreibung**

Die Erfindung betrifft eine in jedes beliebige Kraftfahrzeug einbaubare, zum Betätigen der Wellenkupplung dienende Einrichtung, die auch nachträglich angebracht werden kann.

Wie bekannt, müssen beim Fahren von Kraftfahrzeugen im allgemeinen dreierlei Pedale vom Fahrer betätigt werden, nämlich das Gaspedal, das Bremspedal und - bei manueller Geschwindigkeitsgangschaltung (d.h. bei "Wechselgetrieben") - das Kupplungspedal. Bei automatischen Schaltgetrieben aber wird das Kupplungspedal erübrigt, was mit beträchtlichem ergonomischen und verkehrssicherheitlichen Vorteilen verbunden ist, und außerdem auch das Kraftfahrzeug schont. Solche automatischen Schaltgetriebe beschreiben z.B. Prof. J. Váradi - Dr. Komándi in ihrem Buch: "Traktoren - Automobile" (Landwirtschaftlicher Buchverlag, Budapest, Ungarn, 1980).

Nach den Erfahrungen der Praxis aber sind die bisher bekannten, automatischen Schaltgetriebe sehr teuer, und können - selbst bei durchschnittlicher technischer Schulung des Personals - nicht repariert werden. Ferner beeinträchtigen sie auch die Leistung und Wirtschaftlichkeit des Kraftfahrzeuges. Aus obigen Gründen fanden die automatischen Getriebe - mit Ausnahme in den USA - nur eine sehr beschränkte Verbreitung.

Seitens der Fachleute werden in der Praxis schon seit langer Zeit Versuche dahingehend durchgeführt, eine automatische Lösung für die Betätigung der herkömmlichen Reibungswellenkupplungen zu finden. Eine Reihe solcher Vorschläge ist bekannt, doch konnte bisher keine dieser Lösungen völlig befriedigen und sich in weiterem Umfang durchsetzen bzw. verbreiten. Der Grund hierfür liegt offensichtlich darin, daß ihre konstruktiven Speziallösungen im Betrieb und bei Reparaturen Spezialkenntnisse erfordern bzw. voraussetzen. Außerdem weicht auch ihre Bedienung von den herkömmlichen ab.

Es ist auch eine Einrichtung der im einleitenden Teil des Patentanspruches angegebenen Art in Form eine schaltbaren Kupplung mit einer elektronischen Steuervorrichtung bekannt, von welcher die Bewegung des Stellantriebes beim Einrücken der Kupplung unterbrochen wird, wenn dabei von dem Drehzahlsignalgeber eine Abnahme der Motordrehzahl abgefühlt wird. Zusätzlich kann die Geschwindigkeit des Einrückens der Kupplung bei dabei zunehmender Motordrehzahl gesteuert sein (DE-A-3 216 244).

Der Erfindung liegt die Aufgabe zugrunde, die obigen Mängel zu vermeiden, d.h. eine solche Lösung zu schaffen, welche bei jedem Kraftwagentyp, auch nachträglich, eingebaut werden kann, ohne dabei die originalen Bauelemente des Kraftfahrzeuges verändern, oder Zerlegungen durchführen zu müssen. Zugleich aber sollte sie auch die komplizierte Wahrnahme und Tätigkeit des Fahrers beim Fahren so sehr automatisieren, daß bei der Durchführung der gleichzeitig verrichteten sonstigen üblichen Obliegenheiten die Betätigung der Wellenkupplung automatisch verrichtet wird.

Dies wird erfindungsgemäß durch die Merkmale im Patentanspruch gelöst.

Die Erfindung wird anhand der Zeichnung näher erläutert, in welcher ein bevorzugtes Ausführungsbeispiel der Erfindung dargestellt ist. Es zeigt:

Fig. 1: die prinzipielle Schaltskizze der Einrichtung gemäß der Erfindung;

Fig. 2: einen Schnitt durch ein Detail der Einrichtung gemäß Fig. 1, in relativ größerem Maßstab.

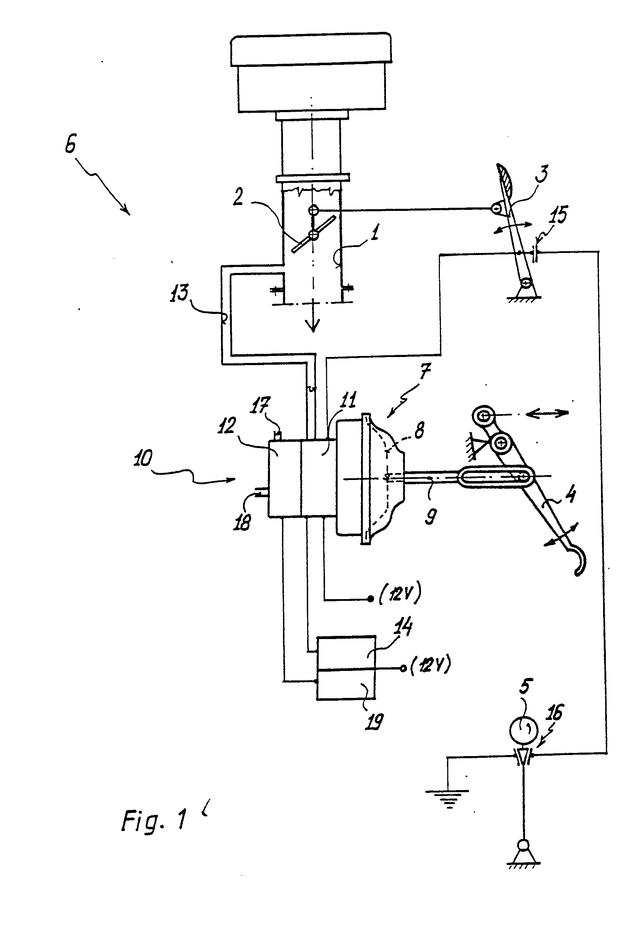

In Fig. 1 ist als eines der möglichen Ausführungsbeispiele ein - auch nachträglich in einen Personenkraftwagen (PKW) einbaubarer - Adapter gemäß der Erfindung zur Betätigung der Wellenkupplung zu sehen, bei dessen Einbau die ursprünglichen Einzelbauteile des PKW's und seine Bedienungsorgane unverändert bleiben. Das Saugrohr des Motors ist mit der Bezugszahl 1, die Drosselklappe mit 2, das damit verbundene Gaspedal mit 3, das Kupplungspedal mit 4, und der Schalthebel mit 5 bezeichnet.

Der ganze Adapter gemäß der Erfindung weist die Bezugszahl 6 auf und hat als pneumatischen Stellantrieb für die Kupplung eine pneumatische Membraneinheit (7), deren in Fig. 1, in der Grundstellung mit gestrichelter Linie dargestellte Membrane 8 mit dem Kupplungspedal 4 im vorliegenden Falle über eine Stange 9 verbunden ist.

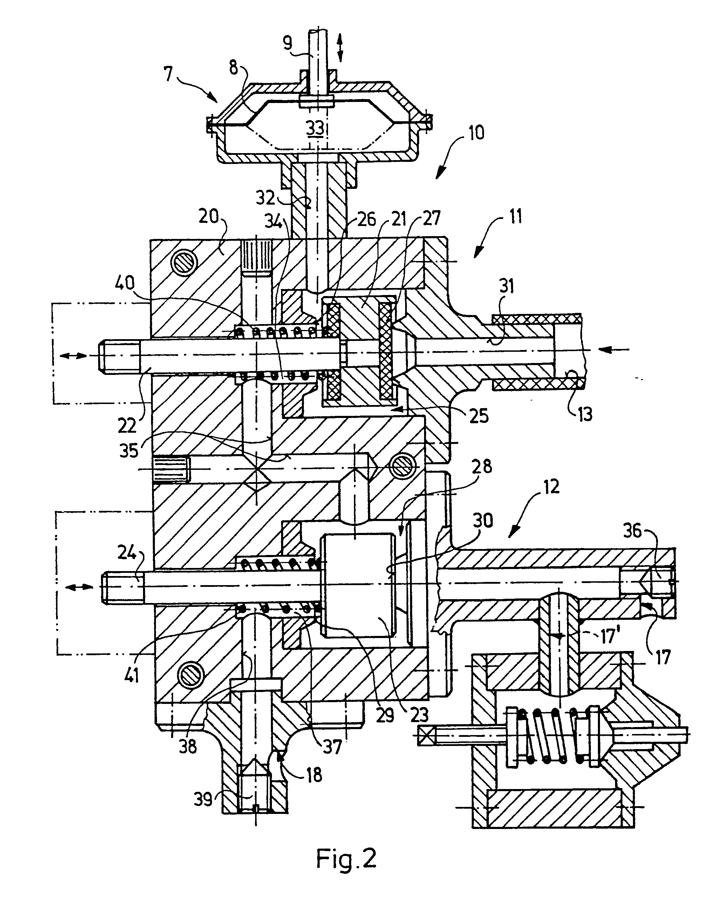

Die Membraneinheit 7 arbeitet mit einer Steuereinheit 10 zusammen, die hier aus zwei elektro-pneumatischen Ventilen 11 und 12 besteht. Die Ventile 11 und 12 sind hier in Reihe geschaltet dargestellt (worauf wir jedoch erst bei Erörterung von Fig. 2 näher eingehen werden). Nach Fig. 1 ist ein erster Anschluß 31 des Ventils 11 über eine Saugleitung 13 am Saugrohr 1 des Motors angeschlossen. Ferner steht das Ventil 11 einerseits mit einem elektronischen Drehzahlsignalgeber 14 für drehzahlproportionale Signale, andererseits mit einem dem Gaspedal 3 zugeordneten Kontakt 15 und einem mit dem Kontakt 15 in Reihe geschalteten Kontakt 16, sowie mit einer 12 V Speisestromquelle in elektrischer Verbindung. Der elektrische Kontakt 16 arbeitet mit dem Schalthebel 5 zusammen, und schließt sofort, wenn in irgendwelche Richtung der Schalthebel 5 vom Fahrer verschoben wird, ansonsten steht er offen. Der Kontakt 15 ist nur bei Grundstellung des Gaspedals 3 in geschlossenem Zustand; beim Niederdrücken des Gaspedals 3 öffnet er.

Das elektro-pneumatische Ventil 12 kann über die - im vorliegenden Falle - regulierbaren Drosselungen 17 und 18 mit der Außenluft in Verbindung gebracht werden und steht ferner mit einem elektronischen Drehzahlsignalgeber 19 für drehzahlproportionale Signale sowie mit der 12 V Speisestromquelle in elektrischer Verbindung.

Bei den mit der Ausführungsart nach Fig. 1 durchgeführten Versuchen wurde der Schwellenwert des Drehzahlsignalgebers 14 mit 1200 U/ Min, der Schwellenwert des Drehzahlsignalgebers 19 aber mit 1800 U/Min bei einem PKW Typ "Renault 12" gewählt.

Diese Drehzahlsignalgeber 14, 19 können übrigens z.B. am Zündverteilerkopf des Motors einfach aufmontiert werden.

Die Details der Steuereinheit 10 sind in Fig. 2 zu sehen. Bei dieser Ausführungsform sind die beiden in Reihe geschalteten elektro-pneumatischen Ventile 11 und 12 in einem gemeinsamen Gehäuse 20 untergebracht. Ein Ventilteller 21 des Ventils 11 und sein mit jenem starr verbundener Ventilschaft 22, sowie ein Ventilschaft 24 eines Ventiltellers 23 des Ventils 12 sind im Gehäuse 20 zueinander parallel und axial verschiebbar angeordnet.

Ein Luftraum 25, welcher auch zum Unterbringen des Ventiltellers 21 des Ventils 11 vorgesehen ist, wird - bei axialer Verschiebung dessen - auf beiden Seiten von Ventilsitzen 26 bzw. 27 begrenzt; in ähnlicher Weise wird auch ein den Ventilteller 23 aufnehmender Luftraum 28 des Ventils 12 beidseitig durch Ventilsitze 29 bzw. 30 begrenzt. Der Luftraum 25 beim Ventil 11 kann über den Einlaß 31 an die Saugleitung 13 angeschlossen werden; andererseits kann sie bei geöffneter Stellung des Ventilsitzes 27 über einen Auslaß 32 an einen Luftraum 33 der Membraneinheit 7 angeschlossen werden.

Der Luftraum 25 kommuniziert bei offener Stellung des Ventilsitzes 26 über Durchgänge 34 und 35 mit dem Luftraum 28 des Ventils 12. Bei der linken Endstellung des Ventiltellers 23 befindet sich der Ventilsitz 30 in geöffnetem Zustand, und dann kommuniziert der Luftraum 28 über die Drosselung 17 mit der Atmosphäre. Der freie Durchgangsquerschnitt der Drosselung 17 kann hier mit einer Schraube 36 reguliert werden. In der rechten Endstellung des Ventiltellers 23 (nach Fig. 2) ist der Ventilsitz 30 dicht abgeschlossen. Es kommuniziert dann der Luftraum 28 des Ventils 12 über Durchgänge 37 und 38, ferner über die Drosselung 18 mit der Atmosphäre. Der freie Öffnungsquerschnitt der Drosselung 18 kann mit einer Schraube 39 reguliert werden.

Aus Fig. 2 ist zu ersehen, daß der Öffnungsquerschnitt der Drosselung 17 im vorliegenden Falle beträchtlich kleiner ist als der der Drosselung 18. Hierauf soll noch weiter unten eingegangen werden.

Aus Fig. 2 ist zu ersehen, daß die Ventilteller 21 und 23 - in Grundstellung - auf die Ventilsitze 27 bzw. 30 von einer Druckfeder 40 bzw. 41 zwangsläufig aufgepreßt werden. Diesen gegenüber können die Ventilteller 21 und 23 - mit Hilfe der hier nicht eingezeichneten Elektromagneten - (deren Eisenkern am linken Ende der Ventilschäfte 22 bzw. 24 mit Gewinde angeschlossen ist) in die linke Endstellung verschoben werden.

Der erfindungsgemäße Adapter 6 für Kupplungbetätigung (in seiner als Beispiel dargestellten Ausführungsform) arbeitet wie folgt:

Beim Anlassen des PKW's ergreift der Fahrer, ohne das Gaspedal 3 niederzudrücken, den Schalthebel 5. Wird der Schalthebel 5 aus seiner Grundstellung fortbewegt, dann schließt der Kontakt 16.

Zugleich damit erhält aber der Elektromagnet der elektropneumatischen Ventile 11 und 12 Erregerstrom und deren Ventilteller 21 bzw. 23 gelangen in ihre linke Endstellung, entgegen dem Federdruck der Druckfedern 40 bzw. 41. Dabei wird dann der Ventilsitz 27 des Ventils 11 freigegeben, sodaß über den Einlaß 31 der Luftraum 25, dieser über den Auslaß 32 aber mit dem Luftraum 33 der Membraneinheit in Verbindung, d.h. unter Unterdruck gelangt. Durch die Einwirkung des Unterdrucks kommt nun die Membrane 8 der Membraneinheit 7 in die in Fig. 2 mit gestrichelter Linie angezeigte Stellung, in welcher sie über eine Bewegung der Stange 9 das Kupplungspedal 4 betätigt, d.h. die Wellenkupplung löst. Die Wellenkupplung bleibt auch solange in gelöster Stellung, bis durch ein Niederdrücken des Gaspedals 3, d.h. durch Erhöhung der Drehzahl, der an der elektronischen Signalsendereinheit 14 eingestellte Schwellenwert (1200 U/Min) erreicht ist. Dann hört nämlich auf ein elektrisches Signal des Drehzahlsignalgebers 14 die magnetische Erregung des Ventils 11 auf und die Druckfeder 40 schiebt den Ventilteller 21 in seine in Fig. 2 dargestellte Grundstellung zurück. Damit aber hört auch der Unterdruck im Luftraum 33 der Membrane 7 auf, demzufolge dann sinngemäß die Wellenkupplung schließt. Da aber dann der Elektromagnet des Ventils 12 noch Erregung empfängt, ist das Tellerventil 23 in seiner linken Endstellung anzutreffen. In diesem Falle kommuniziert der Luftraum 25 des Ventils 11 über die Durchgänge 34 und 35 mit dem Luftraum 28 des Ventils 12, der jedoch über die regulierte Drosselung 17 mit der Atmosphäre kommuniziert. Somit kann (zufolge der Drosselung 17) die Verschiebungsgeschwindigkeit der Membrane 8 mitreguliert werden, d.h. die Schnelle des Kupplungschließens. Insbesondere hat dies beim Losfahren des PKW's eine besondere Wichtigkeit, da ja dann in solchem Falle die Realisierung eines allmählichen Kupplungschließens besonders erwünscht ist.

Sobald die Motordrehzahl den auf der Signalsendereinheit 19 eingestellten Schwellenwert (1800 U/Min.) erreicht hat, hört auch die Erregung des Elektromagneten des Ventils 12 auf und der Luftraum 25 des Ventils 11 befindet sich nun über die Durchgänge 34 und 35 in Verbindung mit dem Luftraum 28 des Ventils 12, das seinerseits über die Durchgänge 37 und 38 sowie die Drosselung 18 mit der Atmosphäre kommuniziert. Da die Drosselung 18 einen verhältnismäßig größeren freien Querschnitt (wie oben erwähnt) hat, kann durch diesen hindurch eine größere Luftmenge in den Luftraum 25 des Ventils 11 strömen, d.h. es kann damit ein Schnellschließen der Wellenkupplung erzielt werden. Diese Art der Wellenkupplungsbetätigung entspricht gut den oberen Getriebegängen.

Wir bemerken noch, daß der Kontakt 15 bei einer solchen Anordnung auch zugleich als Verriegelung zu dienen hat, da er es verhindert, daß der Fahrer bei dem Gasgeben auf einen höheren Geschwindigkeitsgang schaltet.

Beim Gangwechseln während des Fahrens, wobei der Fahrer den Schalthebel 5 ergreift, diesen in irgendeine Richtung umlegt und das Gas zurücknimmt, wird mit Wiederholung der oben beschriebenen Operationen durch den erfindungsgemäßen Adapter 6 die Wellenkupplung gelöst, dann nach dem Gangwechseln die Wellenkupplung sofort im Sinne des Schließens betätigt, wenn sich auch die Motordrehzahl über den an den Drehzahlsignalgebern 14 und 19 eingestellten Schwellenwerten befindet. Es ist auch eine weitere Ausführungsform möglich, bei der ein von der Stellung der Drosselklappe abhängiger Schalter bei vorbestimmten Drehzahlwerten in Tätigkeit tritt (nicht dargestellt).

Beim Bremsen sinkt die Drehzahl des Motors. Sobald der Schwellenwert des Drehzahlsignalgebers erreicht wird, schaltet das Ventil 11 die Membraneinheit 7 auf Unterdruck, worauf dann der Adapter 6 die Wellenkupplung löst.

Unsere Versuche haben den Nachweis erbracht, daß der erfindungsgemäße Adapter 6 für Kupplungbetätigung betriebssicher arbeitet, da ja - wenn die Wellenkupplung gelöst werden soll - immer die nötige Menge an Unterdruck zur Verfügung steht. Bemerkt sei hier, daß man gegebenenfalls die Wellenkupplung auch durch "Gasspritzer" betätigen kann, da ja beim Hochlassen des Gaspedals 3 und dem Umlegen des Schalthebels 5 der Adapter 6 bei jeder Drehzahl die Wellenkupplung löst.

Wie wir darauf schon weiter oben hingewiesen haben, kann der Drehzahlsignalgeber 14 zweckmäßig mit den von der Zündvorrichtung des Benzinmotors abgenommenen Impulsen betätigt werden. Der Drehzahlsignalgeber 19 kann gegebenenfalls von der Ausgangswelle der Motorkraftübertragung oder vom Motor selbst gesteuert werden.

Auch eine solche weitere Ausführungsart ist möglich, bei welcher anstatt der Drehzahlsignalgeber 14 und 19 nur ein einziger solcher Drehzahlsignalgeber angewendet wird, der zwei oder mehr Drehzahlschwellenwerte wahrzunehmen vermag. Gegebenenfalls kann als pneumatischer Stellantrieb anstatt der Membraneinheit 7 beispielsweise auch ein pneumatischer Arbeitszylinder verwendet werden. Die Steuereinheit 10 kann - abweichend von der dargestellten Ausführung - ebenfalls jede beliebige geeignete Augestaltung haben. Ja sogar - z.B. bei Autobussen - ist auch eine solche Ausführungsform denkbar, bei der mehr als zwei elektropneumatische Ventile in Reihe geschaltet werden, um eine noch präzisere und feinere Wellenkupplungsbetätigung zu erzielen.

Da bei den Dieselmotoren der Saugdruck nicht ausreichend ist, kann entweder der erfindungsgemäße Adapter 6 von dem bei diesen Fahrzeugen vorhandenen Preßluftsystem betrieben werden oder es muß zusätzlich für ein Unterdrucksystem gesorgt werden.

Ein wichtiger Vorzug des erfindungsgemäßen Adapters 6 besteht darin, daß er nicht nur fabrikmäßig im Herstellwerk in jedes Kraftfahrzeug eingebaut werden kann, sondern in diese auch nachträglich eingebaut werden kann, ohne dabei die Originalbauteile des Fahrzeugs ändern zu müssen, und so kann damit auch ihre Arbeitsweise modernisiert werden. Ein weiterer Vorteil ist, daß ein mit dem Adapter 6 gemäß der Erfindung versehenes Kraftfahrzeug je nach Belieben in der Zwei- oder Dreipedalart gesteuert und gefahren werden kann, wenn hierfür ein Bedarf vorliegt (z.B. Anlassen mit Anschieben).

Schließlich sei noch bemerkt, daß durch die Anwendung des erfindungsgemäßen Adapters 6 zwar die automatische Schaltung der Gänge nicht gelöst wird, doch mit der Automatisierung des Anfahrens und Anhaltens sowie der Betätigung der Wellenkupplung während des Fahrens das Fahren des Kraftfahreuges wesentlich erleichtert wird. Es erfordert von dem Fahrer keinerlei besondere Geschicklichkeit zu irgendeinem gegebenen Fahrzeugtyp, oder eine besondere Übung, sichert aber zugleich ein glattes Anfahren und verhindert das Abwürgen des Motors. Auf diese Weise können durch Verwendung des erfindungsgemäßen Adapters 6 die aus obigen Ursachen auftretenden Gefahrensituationen z.B. im Stadtverkehr vermindert werden, was in verkehrstechnischer Hinsicht ein beträchtlicher Vorzug ist. Ein weiterer Vorteil der Erfindung ist, daß damit das Fahrzeug geschont wird. Dies aber verlängert seine Lebensdauer und eliminiert im allgemeinen alle jene Fehler und Mängel, die beim Fahren eines unbekannten oder ungewohnten Fahrzeugtyps auftreten können. Der Adapter 6 gemäß der Erfindung kann mit einem verhältnismäßig geringen Aufwand hergestellt und eingebaut werden.

**Patentanspruch**

Einrichtung zum elektropneumatischen Betätigen der Kupplung zwischen der Brennkraftmaschine und dem Schaltgetriebe eines Kraftfahrzeuges, mit einem pneumatischen Stellantrieb (7) für die Kupplung, einer elektropneumatischen Steuereinheit (10) mit einem pneumatischen Ventilblock (11-12), sowie mit Kontakten (15, 16) am Gaspedal (3) und am Getriebeschalthebel (5) und einem Motor-Drehzahlsignalgeber (14 bzw. 19), zur Betätigung der elektropneumatischen Steuereinheit (10), wobei der pneumatischen Ventilblock (11-12) der Steuereinheit (10) mit vier Anschlüssen versehen ist, von denen der erste Anschluß (31) mit einer Saugleitung (13) und der zweite Anschluß (32) mit dem Stellantrieb (7) verbunden ist, dadurch gekennzeichnet, daß der dritte und der vierte Anschluß des pneumatischen Ventilblocks (11-12) über unterschiedlich eingestellte Drosseln (17 bzw. 18) mit der Atmosphäre verbunden sind, wobei der Kontakt (15) am Gaspedal (3) und der Kontakt (16) am Schalthebel (5) in Reihe geschaltet sind und der Kontakt (15) am Gaspedal (3) an einem elektro-pneumatischen Ventil (11) des Ventilblocks (11-12) angeschlossen ist und der Drehzahlsignalgeber (14 bzw. 19) auf mindestens zwei vorbestimmte Schwellenwerte zur Steuerung des Kupplungseinrückens eingestellt ist.

**Revendication**

Dispositif d'actionnement électropneumatique de l'embrayage interposé entre le moteur thermique et la boîte de vitesses d'un véhicule automobile comportant un organe pneumatique de positionnement (7) pour l'embrayage, une unité de commande électropneumatique (10) munie d'un bloc de valves pneumatiques (11, 12) ainsi que de contacts (15, 16) sur la pédale d'accélérateur (3) et sur ce levier de commande de vitesses (5) et d'un émetteur de signal de vitesse de rotation de moteur (14 ou 19), pour l'actionnement de l'unité de commande électropneumatique (10), le bloc de valves pneumatiques (11, 12) de l'unité de commande (10) étant muni de quatre raccords, dont le premier (31) est relié à une pipe d'admission (13) et le second (32) à l'organe de positionnement (7), caractérisé en ce que le troisième et le quatrième raccords du bloc de valves pneumatiques (11, 12) sont reliés à l'atmosphère via des étranglements réglés de façon différente (17 ou 18), en ce que le contact (15) sur la pédale d'accélérateur (3) et le contact (16) sur le levier de commande de vitesses (5) sont montés en série et en ce que le contact (15) sur la pédale d'accélérateur (3) est relié à une valve électropneumatique (11) du bloc de valves (11, 12) et en ce que l'émetteur de vitesses de rotation (14 ou 19) est réglé sur au moins deux valeurs de seuil prédéterminées pour la commande de l'accouplement de l'embrayage.

**Claim**

Device for electropneumatic actuation of the clutch between the internal-combustion engine and the change over gear of a motor vehicle, comprising a pneumatic adjusting drive (7) for the clutch, an electro-pneumatic control unit (10) with a pneumatic valve block (11-12), and comprising contacts (15, 16) on the accelerator pedal and on the gear shift lever (5) and an engine speed signal indicator (14 resp. 19) for actuation of the electro-pneumatic control unit (10), wherein the pneumatic valve block (11-12) of the control unit (10) is provided with four connections, from which the first connection (31) is connected to a suction conduit and the second connection (32) to the adjusting drive (7), characterised in that the third and the fourth connections of the pneumatic valve block (11-12) are in connection with the atmosphere through differently set throttles (17 resp. 18), wherein the contact (15) on the accelerator pedal (3) and the contact (16) on the clutch lever (5) are serially connected and the contact (15) on the accelerator pedal (3) is connected to an electro-pneumatic valve (11) of the valve block (11-12), and the speed signal indicator (14 resp. 19) is set to at least two predetermined threshold values for controlling coupling of the clutch.

EP 0 295 275 B1

Fig. 1

1

Fig.2